# EUROPEAN PATENT APPLICATION

(11) **EP 4 535 108 A1**
(43) Date of publication of application: **09.04.2025**
(21) Application number: 23201589.1
(22) Date of filing: 04.10.2023
(51) Int. Cl.: G05B 23/00

(54) **TRANSMITTING IDENTIFIER OF INDUSTRIAL AUTOMATION DEVICE VIA VOICE COMMUNICATION SESSION**

(71) Applicant: ABB SCHWEIZ AG, 5400 Baden (CH)
(72) Inventor: Kohvakka, Mikko, 00380 Helsinki (FI); Hu, Zhongliang, 02160 Espoo (FI)
(74) Representative: Kolster Oy Ab

(57) **Abstract**

Disclosed is a method comprising receiving (301), by a user device (102), information indicating at least: a phone number of a remote support device (103), and an identifier of an industrial automation device (101); initiating (302), by the user device (102), a voice communication session with the remote support device (103) by using the phone number of the remote support device (103); and transmitting (303), by the user device (102), to the remote support device (103), via the voice communication session, at least the identifier of the industrial automation device (101).

## Description

### FIELD

The following example embodiments relate to industrial automation and to communication systems.

### BACKGROUND

Industrial automation devices can indicate several warnings and faults for troubleshooting reasons, for example. Some industrial automation devices may be connected to the internet to enable remote condition monitoring of such industrial automation devices. However, there is a challenge in how to enable remote troubleshooting for industrial automation devices that are not connected to the internet.

### BRIEF DESCRIPTION

The scope of protection sought for various example embodiments is set out by the independent claims. The example embodiments and features, if any, described in this specification that do not fall under the scope of the independent claims are to be interpreted as examples useful for understanding various embodiments.

According to an aspect, there is provided a user device comprising at least one processor, and at least one memory storing instructions that, when executed by the at least one processor, cause the user device at least to: receive information indicating at least: a phone number of a remote support device, and an identifier of an industrial automation device; initiate a voice communication session with the remote support device by using the phone number of the remote support device; and transmit, to the remote support device, via the voice communication session, at least the identifier of the industrial automation device.

According to another aspect, there is provided a user device comprising: means for receiving information indicating at least: a phone number of a remote support device, and an identifier of an industrial automation device; means for initiating a voice communication session with the remote support device by using the phone number of the remote support device; and means for transmitting, to the remote support device, via the voice communication session, at least the identifier of the industrial automation device.

According to another aspect, there is provided a method comprising: receiving, by a user device, information indicating at least: a phone number of a remote support device, and an identifier of an industrial automation device; initiating, by the user device, a voice communication session with the remote support device by using the phone number of the remote support device; and transmitting, by the user device, to the remote support device, via the voice communication session, at least the identifier of the industrial automation device.

According to another aspect, there is provided a computer program comprising instructions which, when executed by a user device, cause the user device to perform at least the following: receiving information indicating at least: a phone number of a remote support device, and an identifier of an industrial automation device; initiating a voice communication session with the remote support device by using the phone number of the remote support device; and transmitting, to the remote support device, via the voice communication session, at least the identifier of the industrial automation device.

According to another aspect, there is provided a computer readable medium comprising program instructions which, when executed by a user device, cause the user device to perform at least the following: receiving information indicating at least: a phone number of a remote support device, and an identifier of an industrial automation device; initiating a voice communication session with the remote support device by using the phone number of the remote support device; and transmitting, to the remote support device, via the voice communication session, at least the identifier of the industrial automation device.

According to another aspect, there is provided a non-transitory computer readable medium comprising program instructions which, when executed by a user device, cause the user device to perform at least the following: receiving information indicating at least: a phone number of a remote support device, and an identifier of an industrial automation device; initiating a voice communication session with the remote support device by using the phone number of the remote support device; and transmitting, to the remote support device, via the voice communication session, at least the identifier of the industrial automation device.

According to another aspect, there is provided an industrial automation device comprising at least one processor, and at least one memory storing instructions that, when executed by the at least one processor, cause the industrial automation device at least to: provide, to a user device, information indicating at least: a phone number of a remote support device, and an identifier of the industrial automation device.

According to another aspect, there is provided an industrial automation device comprising: means for providing, to a user device, information indicating at least: a phone number of a remote support device, and an identifier of the industrial automation device.

According to another aspect, there is provided a method comprising: providing, by an industrial automation device, to a user device, information indicating at least: a phone number of a remote support device, and an identifier of the industrial automation device.

According to another aspect, there is provided a computer program comprising instructions which, when executed by an industrial automation device, cause the industrial automation device to perform at least the following: providing, to a user device, information indicating at least: a phone number of a remote support device, and an identifier of the industrial automation device.

According to another aspect, there is provided a computer readable medium comprising program instructions which, when executed by an industrial automation device, cause the industrial automation device to perform at least the following: providing, to a user device, information indicating at least: a phone number of a remote support device, and an identifier of the industrial automation device.

According to another aspect, there is provided a non-transitory computer readable medium comprising program instructions which, when executed by an industrial automation device, cause the industrial automation device to perform at least the following: providing, to a user device, information indicating at least: a phone number of a remote support device, and an identifier of the industrial automation device.

According to another aspect, there is provided a remote support device comprising at least one processor, and at least one memory storing instructions that, when executed by the at least one processor, cause the remote support device at least to: receive, from a user device, via a voice communication session, at least an identifier of an industrial automation device; and display at least the identifier to an operator.

According to another aspect, there is provided a remote support device comprising: means for receiving, from a user device, via a voice communication session, at least an identifier of an industrial automation device; and means for displaying at least the identifier to an operator.

According to another aspect, there is provided a method comprising: receiving, by a remote support device, from a user device, via a voice communication session, at least an identifier of an industrial automation device; and displaying, by the remote support device, at least the identifier to an operator.

According to another aspect, there is provided a computer program comprising instructions which, when executed by a remote support device, cause the remote support device to perform at least the following: receiving, from a user device, via a voice communication session, at least an identifier of an industrial automation device; and displaying at least the identifier to an operator.

According to another aspect, there is provided a computer readable medium comprising program instructions which, when executed by a remote support device, cause the remote support device to perform at least the following: receiving, from a user device, via a voice communication session, at least an identifier of an industrial automation device; and displaying at least the identifier to an operator.

According to another aspect, there is provided a non-transitory computer readable medium comprising program instructions which, when executed by a remote support device, cause the remote support device to perform at least the following: receiving, from a user device, via a voice communication session, at least an identifier of an industrial automation device; and displaying at least the identifier to an operator.

### LIST OF DRAWINGS

In the following, various example embodiments will be described in greater detail with reference to the accompanying drawings, in which
FIG. 1 illustrates a communication system to which some example embodiments may be applied;
FIG. 2 illustrates a signal flow diagram according to an example embodiment;
FIG. 3 illustrates a flow chart according to an example embodiment;
FIG. 4 illustrates a flow chart according to an example embodiment;
FIG. 5 illustrates a flow chart according to an example embodiment; and
FIG. 6 illustrates an example of an apparatus.

### DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

Digitalization is an emerging trend in the automation industry, and it may improve customer experience in many aspects. For example, troubleshooting may be easier, since industrial automation devices can indicate more precisely the condition of their components and the need for service. Industrial automation devices can indicate several warnings and faults with error codes and messages, which helps service and maintenance, for example. Some automation devices are always connected to the internet, which makes remote condition monitoring easier. However, there is still a large number of industrial automation devices without any internet connection (e.g., due to cyber security threats, lack of a suitable communication interface, lack of internet infrastructure in remote locations, etc). In such cases, a user device, such as a mobile phone or a computer, can operate between the industrial automation device and a cloud service or customer service by forming a temporary internet connection and communicating with the industrial automation device by different means, such as a short-range wireless connection or a wired connection, or image processing such as a quick-response (QR) code or dynamic QR code, etc.

For example, a mobile application in the user device may be used to help the troubleshooting and device registration process of the industrial automation device by utilizing a dynamic QR code. With such an application, the industrial automation device may generate the dynamic QR code and present it on the display of the industrial automation device. The QR code may comprise, for example, the serial number and one or more error codes of the industrial automation device, as well as other relevant information for the troubleshooting or registration process. The mobile application may form an internet connection and send the data to a cloud service. After that, the user needs to wait until the process handles the service request. There may be direct feedback available based on the error code, but it is not always available.

However, in some cases, conventional phone calls to customer service may be preferred to get immediate troubleshooting help for the industrial automation device. On the other hand, in this case, the user may need to manually find, read and spell the data (e.g., device serial number and error code) during the call. This is error-prone, slow and difficult. Thus, there is a need for a solution to automatically send the error code and device identification data of the industrial automation device to the service center during the phone call.

Some example embodiments provide a method for automatically sending identification and error code information of an industrial automation device to a remote support device (e.g., customer service center) during a phone call, without any need for an internet connection or digital services. This helps to start the troubleshooting process.

For example, a dynamic QR code may be used to provide the phone number of the customer service followed by an extension number comprising an additional string of numbers identifying the industrial automation device and possible errors and/or warnings. The user may scan the QR code with a QR code reader and press the call button, which initiates the phone call and sends the device identifier and/or error code(s) to the customer service automatically.

Alternatively, instead of a QR code, the device identifier and/or error code(s) may be sent via a wireless (e.g., Bluetooth) or wired connection from the industrial automation device to the user device.

The example embodiments described herein make the troubleshooting of industrial automation device easier, when the user wants or needs to use a conventional phone call to contact the customer service. A conventional phone call may be needed, when an internet connection to digital services is not available, or if the user needs immediate help. By automatically sending the serial numbers and error codes to the customer service, any human errors related to reading the serial numbers and error codes from the industrial automation device can be eliminated. Furthermore, no additional hardware may be needed in the industrial automation device for enabling this functionality.

An example use case according to an example embodiment is described in the following. A user (e.g., a maintenance engineer) notices that there is a fault notification on the control panel of an industrial automation device indicating that there is something wrong with the industrial automation device. The user notices that there is a QR code generated and shown on the control panel display. The user then takes out their phone and opens a camera application to scan the QR code. Upon scanning the QR code, the phone number of the customer service is displayed on the user's phone together with the extension number representing the identifier and/or one or more error codes associated with the industrial automation device. By embedding the extension number together with the phone number, the customer service can identify the industrial automation device and the potential issue upon receiving the phone call. By knowing the potential issue, the customer service system can automatically assign a suitable expert with experience on that issue to answer the phone call. During the phone call, with the help of the automatically provided information, the customer service can explain the solution to the user in order to solve the issue quickly.

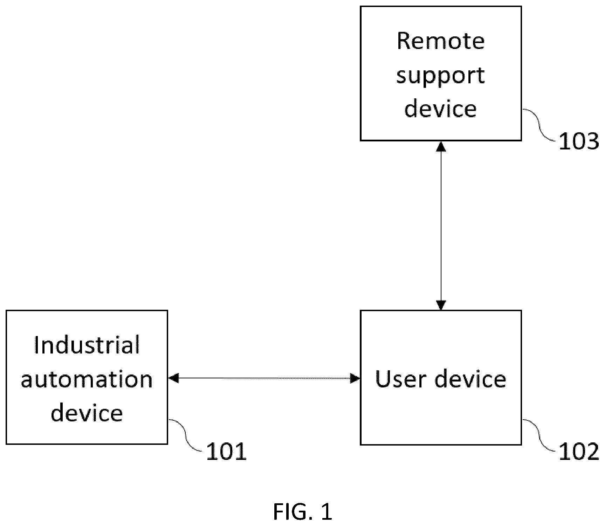

FIG. 1 illustrates a communication system to which some example embodiments may be applied. Referring to FIG. 1, some example embodiments may be based on wireless communications, such as 2G (second generation), 3G (third generation), 4G (fourth generation), LTE (long term evolution), LTE-A (long term evolution advanced), 5G (fifth generation), 5G NR (new radio), 6G (sixth generation), UMTS (universal mobile telecommunications system), EDGE (enhanced data rates for GSM evolution), WCDMA (wideband code division multiple access), Bluetooth, WLAN (wireless local area network), Wi-Fi, Li-Fi (light fidelity), or any other mobile or wireless or wired network. The communication may also occur between nodes belonging to different but compatible systems, such as LTE and 5G.

It should be noted that FIG. 1 illustrates a simplified system architecture only showing some elements and functional entities, all being logical units whose implementation may differ from what is shown. The connections shown in FIG. 1 are logical connections; the actual physical connections may be different. It is apparent to a person skilled in the art that the system may also comprise other functions and structures. It should be appreciated that the functions, structures, elements, and protocols used in or for communication are irrelevant to the example embodiments. Therefore, they need not be discussed in more detail here.

Referring to FIG. 1, the system may comprise at least at least an industrial automation device 101, a user device 102, and a remote support device 103.

The industrial automation device 101 may comprise, for example, at least one of: a frequency converter, variable frequency drive, variable speed drive, motion drive, motion controller, motor, servomotor, AC/DC module, DC/AC module, DC/DC module, programmable logic controller (PLC), switch, soft starter, robot, or any other device used for industrial automation. AC is an abbreviation for alternating current, and DC is an abbreviation for direct current. A variable frequency drive or a variable speed drive may be used to run or rotate machinery, such as an electric motor, at different speeds, wherein the electric motor may run a pump or any other rotating equipment (e.g., fan, gearbox, belt drive, etc.).

The industrial automation device 101 may comprise or be connected to a controller, for example a proportional-integral-derivative (PID) controller. The controller may be configured to send control signals to the industrial automation device 101. The industrial automation device 101 may control highly dynamic industrial processes, in which for example the speed or torque applied to a motor has to be varied according to the needs of the industrial process.

The industrial automation device 101 may store, for example in an internal memory of the industrial automation device or in an external memory, information on control parameter settings, for example present values of control parameters such as controller gains, ramp times, motor data, limits, magnetization settings, signal filtering settings, and/or motor control settings. The industrial automation device 101 may also store operational information recorded during the operation of the industrial automation device, for example information on key performance indicators, such as load current histogram, torque ripple, torque vs. speed curves, and/or power vs. speed curves, temperature, voltage, current, and/or other information such as resonance frequencies and/or load inertias.

The industrial automation device 101 may be equipped with a short-range communication interface to provide a wireless connection or a wired connection to the user device 102. The connection between the industrial automation device 101 and the user device 102 may be provided, for example, by Bluetooth, Bluetooth low energy, ZigBee, wireless local area network (WLAN or WiFi), wireless mesh network, near field communication (NFC), light fidelity (Li-Fi), DECT-2020 New Radio (NR), Ethernet, universal serial bus (USB), or any other wireless or wired connection. The short-range communication interface may be comprised, for example, in the industrial automation device 101 or in a control panel of the industrial automation device 101. The industrial automation device 101 may be configured to communicate with the user device 102 via the wireless connection or the wired connection.

For example, the industrial automation device 101 may be configured to transmit, to the user device 102, via the wireless connection or the wired connection, information indicating at least: an identifier of the industrial automation device 101, one or more error codes associated with the industrial automation device 101, and a phone number of the remote support device 103.

Alternatively, or additionally, the industrial automation device 101 may be configured to display a quick-response (QR) code readable by the user device 102, wherein the QR code comprises the information indicating at least: the identifier of the industrial automation device 101, the one or more error codes associated with the industrial automation device 101, and the phone number of the remote support device 103.

The user device 102 may comprise user equipment such as a smartphone, mobile phone, tablet computer, laptop computer, desktop computer, or any other computing device. The user device 102 may be a local device located on-site at a close proximity to the industrial automation device 101. The user device 102 may be equipped with a short-range communication interface to provide the wireless connection or the wired connection to the industrial automation device 101. The user device 102 may be configured to communicate with the industrial automation device 101 via the wireless connection or the wired connection.

For example, the user device 102 may be configured to receive, from the industrial automation device 101, via the wireless connection or the wired connection, the information indicating at least: the identifier of the industrial automation device 101, one or more error codes associated with the industrial automation device 101, and the phone number of the remote support device 103.

Alternatively, or additionally, the user device 102 may be configured to read the QR code comprising the information indicating at least: the identifier of the industrial automation device, the one or more error codes associated with the industrial automation device, and the phone number of the remote support device.

The user device 102 may be further configured to initiate a voice communication session with the remote support device 103 by using the phone number of the remote support device 103, and transmit, to the remote support device, via the voice communication session, at least the identifier of the industrial automation device 101 and the one or more error codes associated with the industrial automation device 101.

The remote support device 103 may comprise another user device that may be located at a remote service center, for example. The remote support device 103 may comprise user equipment such as a smartphone, mobile phone, tablet computer, laptop computer, desktop computer, or any other computing device.

Alternatively, the remote support device 103 may comprise a backend system of the remote service center.

The remote support device 103 may be configured to communicate with the user device 102 via the voice communication session. For example, the remote support device 103 may be configured to receive, from the user device 102, via the voice communication session, at least the identifier of the industrial automation device 101 and the one or more error codes associated with the industrial automation device 101.

The remote support device 103 may be further configured to display, to an operator, the identifier of the industrial automation device 101 and the one or more error codes associated with the industrial automation device 101.

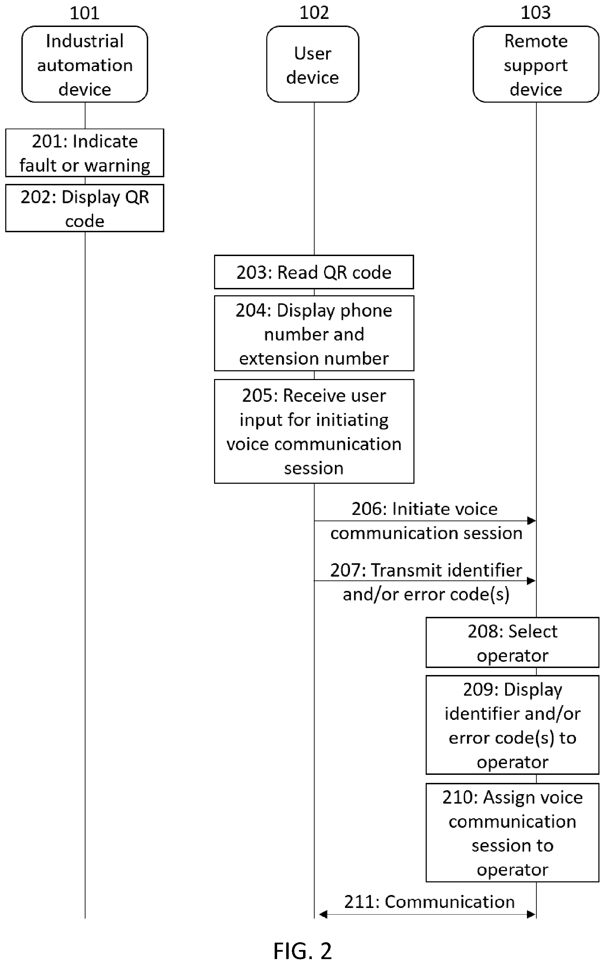

FIG. 2 illustrates a signal flow diagram according to an example embodiment.

Referring to FIG. 2, at 201, an industrial automation device 101 detects a fault or warning associated with the industrial automation device 101, and the industrial automation device 101 indicates the fault or warning for example with a notification light or other indication.

The difference between a warning and a fault is that the industrial automation device 101 cannot be operated when a fault is detected (e.g., the motor does not run), whereas the industrial automation device 101 can still be operated while a warning is active.

A user then notices the indication and uses a control panel of the industrial automation device 101 to search for a quick-response (QR) code from the menu of the control panel.

At 202, upon receiving a user input from the user for displaying the QR code, the industrial automation device 101 generates and displays the QR code (e.g., dynamic QR code), wherein the QR code comprises information indicating at least: a phone number of a remote support device 103 (e.g., service center phone number), an identifier (e.g., serial number) of the industrial automation device 101, and/or one or more error codes associated with the industrial automation device 101. The one or more error codes may indicate one or more warnings or faults associated with industrial automation device 101.

The phone number may be pre-defined, or selected automatically from a plurality of phone numbers based on the one or more error codes and the location of the industrial automation device 101.

At 203, the user device 102 reads (scans) the QR code with a QR code reader application. By reading the QR code, the user device 102 obtains or receives the information indicating at least: the phone number of the remote support device (103), the identifier of the industrial automation device 101, and/or the one or more error codes associated with the industrial automation device 101.

At 204, upon reading the QR code, the user device 102 automatically opens a call application and displays, to the user, the phone number and an extension number, wherein the extension number represents the identifier and/or the one or more error codes associated with the industrial automation device 101.

For example, the phone number and the extension number may be displayed in the following format: <phone number>,,< extension number>#. In this example, the phone number is followed by the extension number. Each comma (,) may add a two-second pause before the extension number is dialed. The hash sign (#) indicates that all the information has arrived and that processing of the information may start.

At 205, the user device 102 receives, from the user, a user input indicating to initiate a voice communication session with the remote support device 103. For example, the user may press a call button displayed on the call application.

At 206, in response to receiving the user input, the user device 102 initiates or establishes the voice communication session with the remote support device 103 by using the phone number of the remote support device 103.

The voice communication session may comprise a circuit-switched voice call. In other words, the voice communication session may be established without an internet connection.

At 207, the user device 102 transmits, to the remote support device 103, via the voice communication session, at least the identifier of the industrial automation device 101 and/or the one or more error codes associated with the industrial automation device 101. The remote support device 103 receives at least the identifier of the industrial automation device 101 and/or the one or more error codes associated with the industrial automation device 101 from the user device 102. For example, the identifer and/or the one or more error codes may be conveyed from the user device 102 to the remote support device 103 via the extension number.

In other words, a voice call is established with the service center and the added content (i.e., the identifier and/or the one or more error codes) is transferred to the service center automatically using the voice call line.

At 208, the remote support device 103 selects, based on the identifier and/or the one or more error codes, an operator (i.e., technical support person) suitable for troubleshooting associated with the industrial automation device 101.

For example, based on the identifier, the remote support device 103 may identify the type of the industrial automation device 101. Based on the one or more error codes, the remote support device 103 may identify a potential technical issue (e.g., a potential grounding issue fault) associated with the industrial automation device. The operator may then be selected by searching a database of operators for an operator that has previous experience or expertise with the identified potential technical issue and/or with the type of the industrial automation device 101.

At 209, the remote support device 103 displays the identifier and/or the one or more error codes to the operator, so that the operator can get the relevant information to start the troubleshooting. The remote support device 103 may also display the identified type of the industrial automation device 101 and the identified potential technical issue to the operator.

At 210, the remote support device 103 assigns the voice communication session to the selected operator.

At 211, the remote support device 103 and the user device 102 communicate with each other over the voice communication session. In other words, the operator of the remote support device 103 and the user of the user device 102 talk with each other over the voice communication session, so that the operator can help the user with the troubleshooting of the industrial automation device 101.

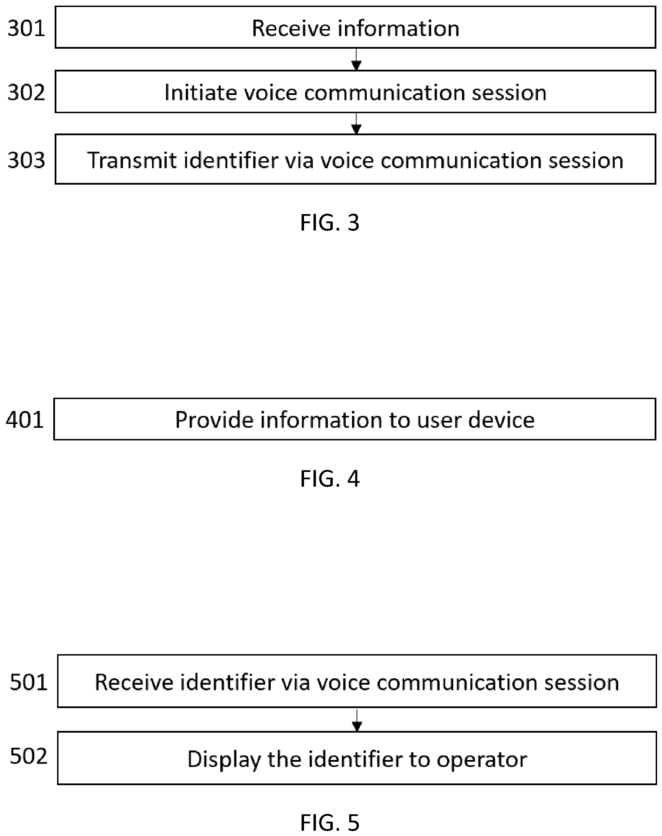

FIG. 3 illustrates a flow chart according to an example embodiment of a method performed by a user device 102.

Referring to FIG. 3, in block 301, the user device 102 receives information indicating at least: a phone number of a remote support device 103, and an identifier of an industrial automation device 101.

For example, the information may be received by reading a quick-response code comprising the information.

As another example, the information may be received by the user device 102 from the industrial automation device 101 via a wireless connection or a wired connection between the user device 102 and the industrial automation device 101.

In block 302, the user device 102 initiates a voice communication session with the remote support device 103 by using the phone number of the remote support device 103. In other words, the user device 102 may start a voice call between the user device 102 and the remote support device 103 by dialing the phone number of the remote support device 103.

In block 303, the user device 102 transmits, to the remote support device 103, via the voice communication session, at least the identifier of the industrial automation device 101.

The voice communication session may comprise, for example, a circuit-switched voice call.

The information may further indicate one or more error codes associated with the industrial automation device 101, in which case the user device 102 may further transmit, to the remote support device 103, via the voice communication session, the one or more error codes associated with the industrial automation device 101.

The user device 102 may display, to a user, the phone number and an extension number, wherein the extension number represents at least the identifier and/or the one or more error codes of the industrial automation device 101.

The user device 102 may receive, from the user, a user input indicating to initiate the voice communication session with the remote support device 103, in which case the voice communication session may be initiated in response to receiving the user input. At least the identifier and/or the one or more error codes of the industrial automation device 101 may be transmitted from the user device 102 to the remote support device 103 by using the extension number.

In other words, the identifier and/or the one or more error codes of the industrial automation device 101 may be transmitted from the user device 102 to the remote support device 103 by appending the extension number (which represents the identifier and/or the one or more error codes) to the phone number of the remote support device 103, when initiating the voice communication session (voice call) from the user device 102.

For example, the extension number may be transmitted from the user device 102 to the remote support device 103 as additional signaling data during the voice call setup phase, or as dual-tone multi-frequency (DTMF) signals after the voice call establishment. Upon receiving the extension number, the remote support device 103 or associated telecommunication infrastructure may decipher the extension number to extract the identifier and/or the one or more error codes of the industrial automation device 101.

FIG. 4 illustrates a flow chart according to an example embodiment of a method performed by an industrial automation device 101.

Referring to FIG. 4, in block 401, the industrial automation device 101 provides, to a user device 102, information indicating at least: a phone number of a remote support device 103, and an identifier of the industrial automation device 101.

The information may further indicate one or more error codes associated with the industrial automation device 101.

For example, the information may be provided to the user device 102 by displaying a quick-response code readable by the user device 102, wherein the quick-response code may comprise the information.

As another example, the information may be transmitted by the industrial automation device 101 to the user device 102 via a wireless connection or a wired connection between the user device 102 and the industrial automation device 101.

FIG. 5 illustrates a flow chart according to an example embodiment of a method performed by a remote support device 103.

Referring to FIG. 5, in block 501, the remote support device 103 receives, from a user device 102, via a voice communication session, at least an identifier of an industrial automation device 101.

The voice communication session may comprise, for example, a circuit-switched voice call.

The remote support device 103 may also receive, from the user device 102, via the voice communication session, one or more error codes associated with the industrial automation device 101.

The identifier and/or the one or more error codes of the industrial automation device 101 may be transmitted from the user device 102 to the remote support device 103 by appending an extension number (which represents the identifier and/or the one or more error codes) to the phone number of the remote support device 103, when initiating the voice communication session (voice call) from the user device 102.

For example, the extension number may be received by the remote support device 103 from the user device 102 as additional signaling data during the voice call setup phase, or as dual-tone multi-frequency (DTMF) signals after the voice call establishment. Upon receiving the extension number, the remote support device 103 or associated telecommunication infrastructure may decipher the extension number to extract the identifier and/or the one or more error codes of the industrial automation device 101.

In block 502, the remote support device 103 displays at least the identifier and/or the one or more error codes to an operator.

The remote support device 103 may select, based on the identifier and the one or more error codes, the operator for troubleshooting associated with the industrial automation device 101, and assign the voice communication session to the operator based on the selection.

The functions and/or blocks described above by means of FIGS. 2-5 are in no absolute chronological order, and some of them may be performed simultaneously or in an order differing from the described one. Other functions and/or blocks may also be executed between them or within them.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

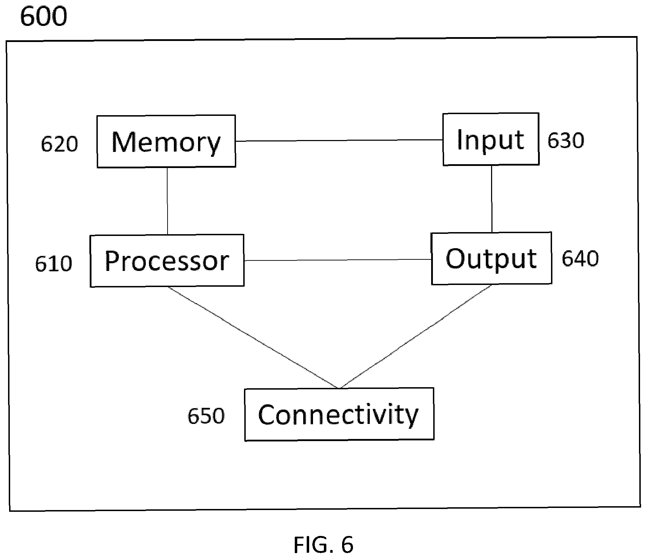

FIG. 6 illustrates an example of an apparatus 600 comprising means for performing one or more of the example embodiments described above with reference to FIGS. 2 to 5. For example, the apparatus 600 may be an apparatus such as, or comprising, or comprised in, a user device 102, or an industrial automation device 101, or a remote support device 103.

The apparatus 600 may comprise a circuitry or a chipset applicable for realizing one or more of the example embodiments described above. For example, the apparatus 600 may comprise at least one processor 610. The at least one processor 610 interprets instructions (e.g., computer program instructions) and processes data. The at least one processor 610 may comprise one or more programmable processors. The at least one processor 610 may comprise programmable hardware with embedded firmware and may, alternatively or additionally, comprise one or more application-specific integrated circuits (ASICs).

The at least one processor 610 is coupled to at least one memory 620. The at least one processor is configured to read and write data to and from the at least one memory 620. The at least one memory 620 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The at least one memory 620 stores computer readable instructions that are executed by the at least one processor 610 to perform one or more of the example embodiments described above. For example, non-volatile memory stores the computer readable instructions, and the at least one processor 610 executes the instructions using volatile memory for temporary storage of data and/or instructions. The computer readable instructions may refer to computer program code.

The computer readable instructions may have been pre-stored to the at least one memory 620 or, alternatively or additionally, they may be received, by the apparatus, via an electromagnetic carrier signal and/or may be copied from a physical entity such as a computer program product. Execution of the computer readable instructions by the at least one processor 610 causes the apparatus 600 to perform one or more of the example embodiments described above. That is, the at least one processor and the at least one memory storing the instructions may provide the means for providing or causing the performance of any of the methods and/or blocks described above.

In the context of this document, a "memory" or "computer-readable media" or "computer-readable medium" may be any non-transitory media or medium or means that can contain, store, communicate, propagate or transport the instructions for use by or in connection with an instruction execution system, apparatus, or device, such as a computer. The term "non-transitory," as used herein, is a limitation of the medium itself (i.e., tangible, not a signal) as opposed to a limitation on data storage persistency (e.g., RAM vs. ROM).

The apparatus 600 may further comprise, or be connected to, an input unit 630. The input unit 630 may comprise one or more interfaces for receiving input. The one or more interfaces may comprise for example one or more temperature, motion and/or orientation sensors, one or more cameras, one or more accelerometers, one or more microphones, one or more buttons and/or one or more touch detection units. Further, the input unit 630 may comprise an interface to which external devices may connect to.

The apparatus 600 may also comprise an output unit 640. The output unit may comprise or be connected to one or more displays capable of rendering visual content, such as a light emitting diode (LED) display, a liquid crystal display (LCD) and/or a liquid crystal on silicon (LCoS) display. For example, the one or more displays may be used to display information, such as the QR code or the phone number and the extension number, to a user. The output unit 640 may further comprise one or more audio outputs. The one or more audio outputs may be for example loudspeakers.

The apparatus 600 further comprises a connectivity unit 650. The connectivity unit 650 enables wireless connectivity to one or more external devices. The connectivity unit 650 comprises at least one transmitter and at least one receiver that may be integrated to the apparatus 600 or that the apparatus 600 may be connected to. The at least one transmitter comprises at least one transmission antenna, and the at least one receiver comprises at least one receiving antenna. The connectivity unit 650 may comprise an integrated circuit or a set of integrated circuits that provide the wireless communication capability for the apparatus 600. Alternatively, the wireless connectivity may be a hardwired application-specific integrated circuit (ASIC). The connectivity unit 650 may also provide means for performing at least some of the blocks or functions of one or more example embodiments described above. The connectivity unit 650 may comprise one or more components, such as: power amplifier, digital front end (DFE), analog-to-digital converter (ADC), digital-to-analog converter (DAC), frequency converter, (de) modulator, and/or encoder/decoder circuitries, controlled by the corresponding controlling units.

It is to be noted that the apparatus 600 may further comprise various components not illustrated in FIG. 6. The various components may be hardware components and/or software components.

As used in this application, the term "circuitry" may refer to one or more or all of the following: a) hardware-only circuit implementations (such as implementations in only analog and/or digital circuitry); and b) combinations of hardware circuits and software, such as (as applicable): i) a combination of analog and/or digital hardware circuit(s) with software/firmware and ii) any portions of hardware processor(s) with software (including digital signal processor(s)), software, and memory(ies) that work together to cause an apparatus, such as a mobile phone, to perform various functions); and c) hardware circuit(s) and/or processor(s), such as a microprocessor(s) or a portion of a microprocessor(s), that requires software (for example firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of example embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

It will be obvious to a person skilled in the art that, as technology advances, the inventive concept may be implemented in various ways within the scope of the claims. The embodiments are not limited to the example embodiments described above, but may vary within the scope of the claims. Therefore, all words and expressions should be interpreted broadly, and they are intended to illustrate, not to restrict, the embodiments.

## Claims

1. A user device (102) comprising:
means for receiving (203, 301) information indicating at least: a phone number of a remote support device (103), and an identifier of an industrial automation device (101);
means for initiating (206, 302) a voice communication session with the remote support device (103) by using the phone number of the remote support device (103); and
means for transmitting (207, 303), to the remote support device (103), via the voice communication session, at least the identifier of the industrial automation device (101).

2. The user device (102) of claim 1, wherein the information further indicates one or more error codes associated with the industrial automation device (101),
wherein the user device (102) further comprises means for transmitting (207, 303), to the remote support device (103), via the voice communication session, the one or more error codes associated with the industrial automation device (101).

3. The user device (102) of any preceding claim, wherein the means for receiving (203, 301) the information are configured to read a quick-response code comprising the information.

4. The user device (102) of any of claims 1 to 2, wherein the means for receiving (203, 301) the information are configured to receive the information from the industrial automation device (101) via a wireless connection or a wired connection.

5. The user device (102) of any preceding claim, further comprising:
means for displaying (204), to a user, the phone number and an extension number, wherein the extension number represents at least the identifier of the industrial automation device (101); and
means for receiving (205), from the user, a user input indicating to initiate the voice communication session with the remote support device (103),
wherein the means for initiating (206, 302) the voice communication session are configured to initiate the voice communication session in response to receiving the user input, and
wherein the means for transmitting (207, 303) at least the identifier of the industrial automation device (101) are configured to use the extension number for transmitting at least the identifier to the remote support device (103) via the voice communication session.

6. The user device (102) of any preceding claim, wherein the voice communication session comprises a circuit-switched voice call.

7. An industrial automation device (101) comprising:
means for providing (202, 401), to a user device (102), information indicating at least: a phone number of a remote support device (103), and an identifier of the industrial automation device (101).

8. The industrial automation device (101) of claim 7, wherein the information further indicates one or more error codes associated with the industrial automation device (101).

9. The industrial automation device (101) of any of claims 7 to 8, wherein the means for providing (202, 401) the information are configured to display a quick-response code readable by the user device (102), wherein the quick-response code comprises the information.

10. A remote support device (103) comprising:
means for receiving (207, 501), from a user device (102), via a voice communication session, at least an identifier of an industrial automation device (101); and
means for displaying (209, 502) at least the identifier to an operator.

11. The remote support device (103) of claim 10, further comprising:
means for receiving (207, 501), from the user device (102), via the voice communication session, one or more error codes associated with the industrial automation device (101);
means for selecting (208), based on the identifier and the one or more error codes, the operator for troubleshooting associated with the industrial automation device (101); and
means for assigning (210) the voice communication session to the operator based on the selection.

12. A method comprising:
receiving (203, 301), by a user device (102), information indicating at least: a phone number of a remote support device (103), and an identifier of an industrial automation device (101);
initiating (206, 302), by the user device (102), a voice communication session with the remote support device (103) by using the phone number of the remote support device (103); and
transmitting (207, 303), by the user device (102), to the remote support device (103), via the voice communication session, at least the identifier of the industrial automation device (101).

13. A method comprising:
providing (202, 401), by an industrial automation device (101), to a user device (102), information indicating at least: a phone number of a remote support device (103), and an identifier of the industrial automation device (101).

14. A method comprising:
receiving (207, 501), by a remote support device (103), from a user device (102), via a voice communication session, at least an identifier of an industrial automation device (101); and
displaying (209, 502), by the remote support device (103), at least the identifier to an operator.

15. A computer program comprising instructions which, when executed by a user device (102), cause the user device (102) to perform at least the following:
receiving (203, 301) information indicating at least: a phone number of a remote support device (103), and an identifier of an industrial automation device (101);
initiating (206, 302) a voice communication session with the remote support device (103) by using the phone number of the remote support device (103); and
transmitting (207, 303), to the remote support device (103), via the voice communication session, at least the identifier of the industrial automation device (101).
